# EUROPEAN PATENT APPLICATION

(11) **EP 2 639 756 A1**
(43) Date of publication of application: **18.09.2013**
(21) Application number: 12159709.0
(22) Date of filing: 15.03.2012
(51) Int. Cl.: G06Q 20/32

(54) **Remote third party payment of in-store items**

(71) Applicant: BlackBerry Limited, Waterloo ON N2L 3W8 (CA)
(72) Inventor: Gopalan, Balaji, Mississuaga, Ontario L4W 0B5 (CA)
(74) Representative: Moore, Barry

(57) **Abstract**

An apparatus (102, 106) and method (200, 290) for remote third party payment of in-store item(s) selected by a user are disclosed herein. The first user (104) selects (202, 292) one or more items located in a store, requests (214) a particular person (106) who is not in the store to pay for those item(s) in real-time or near real-time, and obtains (260) proof of payment in response to the particular person (106) making (232, 236) an electronic form of payment. The proof of payment is sufficient for the sales clerk in the store (or the store checkout system) to deem the purchase of those in-store item(s) to be complete so that the first user can leave the store with the item(s).

## Description

### TECHNICAL FIELD

The present disclosure relates generally to purchasing goods and services. More particularly, the present disclosure relates to multi-party involvement in the purchase of goods and services.

### BACKGROUND

Even with the popularity of online shopping, there are times when purchasing items in a physical store is desirable. For instance, clothing, shoes, and other similar items can be tried on in a store prior to purchase rather than guessing at fit in ecommerce sites. At other times making in-store purchases are a necessity for items that the user needs immediately. If the user is outside, he/she is more likely to make impulse in-store purchases rather than impulse online purchases. There may even be instances when an item that is mass produced and thus seemingly identical to each other, is in fact slightly different from each other such that the user desires a particular one of the items. For any of these reasons, the user may prefer to purchase a particular item in a particular store at a particular time.

Depending on the occasion or the user's financial means, the user may wish another person to pay for the particular item while the user is in the store so that the user can leave the store with the item. If this other person happens to be in the store with the user, the other person can pay for the user-desired item in the store. Otherwise, the user's options are limited. Even if the user is able to contact another person while in the store (e.g., call, text, etc. using a mobile device), the user is required to wait for the other person to arrive at the store to purchase the item on the user's behalf. Otherwise the user can, at most, place the item on hold and return at a later point in time with the other person, the other person's credit card, the other person's cash, or the like to pay for the particular item in a subsequent trip to the store.

Thus, it would be beneficial to provide a mechanism for a user that has selected a particular item in a physical store to easily have another person remotely located from the store pay for the item while the user is in the store so that the user can leave the store with the item. It would also be beneficial to provide a mechanism that facilitates capture of information about the user-selected item to uniquely identify the item. It would additionally be beneficial to provide a mechanism that automates providing useful product information and payment request to another person. A mechanism that provides the user proof of payment for the store clerk is desirable after the other person has paid for the user-desired item. It would be further beneficial for the mechanism to facilitate seamless interaction between different parties and provide seamless access to and presentment of various information to complete purchase of the user-selected item(s).

### BRIEF DESCRIPTION OF THE DRAWINGS

Some embodiments are illustrated by way of example and not limitations in the figures of the accompanying drawings, in which:

FIG. 1 illustrates an example system for remote third party payment of in-store items selected by a user while the user remains in the store according to some embodiments.

FIGs. 2A-2C illustrate an example flow diagram for remote third party payment of in-store items while the user remains in the physical store according to some embodiments.

FIG. 3 illustrates example modules included in a first device and/or a second device to implement the functionalities of the flow diagram of FIGs. 2A-2C.

FIGs. 4A-4C illustrate example user interface screens on the first device or second device according to some embodiments.

FIG. 5 shows a diagrammatic representation of a machine in the example form of a computer system within which a set of instructions, for causing the machine to perform any one or more of the methodologies of FIGs. 2A-2C and 3 according to some embodiments.

The headings provided herein are for convenience only and do not necessarily affect the scope or meaning of the terms used.

### DETAILED DESCRIPTION

Described in detail below is an apparatus and method for remote third party payment of in-store item(s) selected by a user while the user remains in a physical store. The first user selects one or more items located in a store, requests a particular person who is not in the store to pay for those item(s) in real-time or near real-time, and obtains proof of payment in response to the particular person making an electronic form of payment, wherein the proof of payment is sufficient for the sales clerk in the store (or the store checkout system) to authorize the first user to leave the store with the item(s). The following description is presented to enable any person skilled in the art to create and use a computer system configuration and related method and article of manufacture to seamlessly provide to a user in a physical store a proxy of a (limited access) digital wallet associated with another user remotely located from the physical store, in which the another user authorizes and pays for the user-selected item(s) in the physical store so that the user can leave the store with the user-selected item(s) in a single trip to that store.

Various modifications to the embodiments will be readily apparent to those skilled in the art, and the generic principles defined herein may be applied to other embodiments and applications without departing from the spirit and scope of the invention. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the invention with unnecessary detail. Thus, the present disclosure is not intended to be limited to the embodiments shown, but is to be accorded the widest scope consistent with the principles and features disclosed herein.

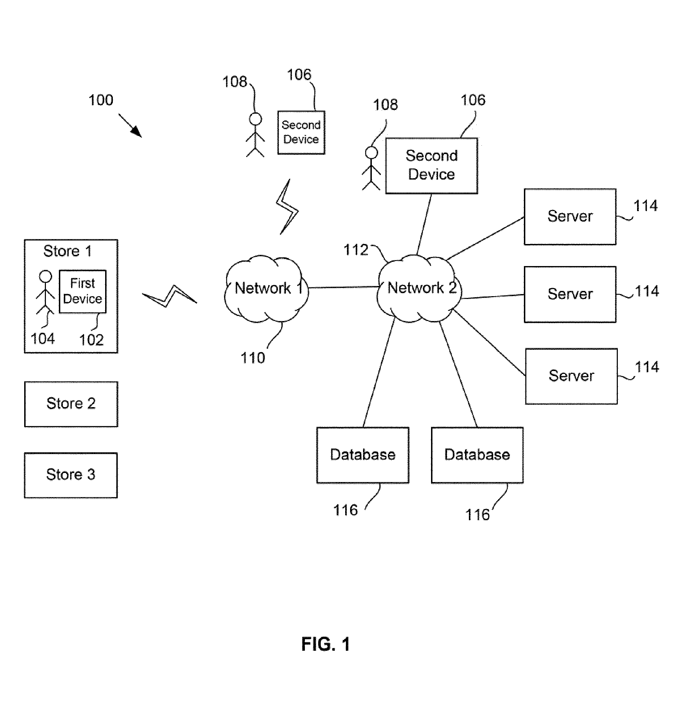

FIG. 1 illustrates an example system 100 for remote third party payment of in-store items selected by a user while the user remains in the store according to some embodiments. The system 100 includes a first device 102, one or more second devices 106, a first network 110, a second network 112, servers 114, and databases 116.

A first user 104 and the first device 102 are located in a physical store. The first device 102 comprises a mobile communication device capable of wireless communication with the first network 110. The first device 102 comprises a computer or computing device, including but not limited to, a cellular or mobile phone, smart phone, tablet, portable digital assistant (PDA), Internet appliance, hand-held device, wireless device, portable device, laptop, netbook, ultrabook, wearable computers, multi-processor systems, microprocessor-based or programmable consumer electronics, mini-computers, and the like.

In some embodiments, the first device 102 includes, but is not limited to, an input sensor (e.g., camera, bar code reader, machine readable information reader, physical keyboard, virtual keyboard provided using software on a touch screen), transceiver, storage unit, display (e.g., touch screen), one or more input mechanisms (e.g., keyboard, trackball, trackpad, touch screen), and a processor. The processor is in communication with and configured to coordinate control of each of the input sensor, transceiver, storage unit, display, and input mechanisms. The first device 102 further includes one or more applications (such as, but not limited to, a web browser, messaging application, and an application for the remote third party payment of in-store items described herein) and interface and communication capabilities to communicate with the second devices 106, servers 114, and databases 116 via the first and second networks 110, 112. Although a single one of the first device 102 is shown in FIG. 1, it is contemplated that more than one of the first device 102 can operate within the system 100.

A second user 108 and his/her associated device - the second device 106 - are located at a different location from the physical store that the first user 104 is in. Each of the second devices 106 comprises a computer or computing device capable of wireless communication with the first network 110, or wireless or wired communication with the second network 112. Each of the second device 106 comprises, but is not limited to, work stations, personal computers, general purpose computers, Internet appliances, hand-held devices, wireless devices, portable devices, wearable computers, cellular or mobile phones, portable digital assistants (PDAs), smart phones, tablets, ultrabooks, netbooks, laptops, desktops, multi-processor systems, microprocessor-based or programmable consumer electronics, game consoles, set-top boxes, network PCs, mini-computers, and the like. Each of the second devices 106 includes one or more applications (such as, but not limited to, a web browser, messaging application, and/or an application for the remote third party payment of in-store items described herein) and interface and communication capabilities to communicate with the first device 102, servers 114, and databases 116 via the first and second networks 110, 112. More or less than two of the second devices 106 can be included in the system 100.

As described in detail below, the first user 104 selects a particular one of the second user 108 to request paying for the first user's in-store item. Hence, the location and type of the second device 106 depends upon the second user 108 selected and the device that the second user 108 decides to interface with. For example, when the second user 108 is outside he/she may use a mobile communication device, while he/she may use a laptop when at home. The first user 104 and second user 108 "pairing" is applicable for personal and/or commercial purposes. In the instance of personal use, the first user 104, for instance, can be a teenager and the second user 108 a member of the teenager's family or friends (e.g., a parent, grandparent, aunt, uncle, sibling, cousin, best friend, etc.). In a commercial setting, the first user 104 may be a personal shopper, assistant, contractor, interior designer, etc. and the second user 108 the first user's client or boss. The remote third party payment mechanism described herein permits the first user 104 to simultaneously obtain approval to purchase a particular in-store item as well as having the second user 108 buy the in-store item.

First network 110 comprises a wireless communications network such as, but not limited to, a cellular network, WiFi network, WiMax network, wireless local area network (WLAN), wireless wide area network (WWAN), wireless metropolitan area network (WMAN), wireless virtual private network (WVPN), an ad hoc network, or a combination of two or more such networks. When first network 110 comprises a public network, security features (e.g., VPN/SSL secure transport) may be included to ensure authorized access within the system 100.

Second network 112 comprises another communications network such as, but not limited to, a local area network (LAN), a wireless LAN (WLAN), a wide area network (WAN), a wireless WAN (WWAN), a metropolitan area network (MAN), a wireless MAN, a WiFi network, a WiMax network, an ad hoc network, an intranet, an extranet, a virtual private network (VPN), a portion of the Internet, the Internet, a portion of a public switched telephone network (PSTN), a cellular network, or a combination of two or more such networks. When second network 112 comprises a public network, security features (e.g., VPN/SSL secure transport) may be included to ensure authorized access within system 100.

Certain devices are able to directly access first network 110 but not the second network 112. For example, the first device 102 has direct access to the first network 110 but not necessarily a direct access to the second network 112. Conversely, the servers 114, for example, have direct access to the second network 112 but not direct access to the first network 110. In order to facilitate communication between networks 110 and 112, each of the networks 110, 112 includes servers, databases, switches, routers, base stations, repeaters, software, firmware, intermediating servers, and/or other components (not shown) to facilitate communication between components with access to the first network 110 (e.g., first and second devices 102, 106) and components with access to the second network 112 (e.g., servers 114, databases 116, second device 106). For example, the first network 110 comprises a cellular network and the second network 112 comprises the Internet, wherein the first device 102 accesses websites hosted on the servers 114 via the first and second networks 110,112.

Although the first network 110 and second network 112 are shown as two networks, the two networks can be implemented together as a single network configured to support both wireless and wired communications.

Servers 114 comprise one or more computers or processors configured to communicate with the first device 102, second devices 106, and/or databases 116 via the second network 112. Servers 114 are configured to host one or more applications accessed by the first and second devices 102, 106; to provide processing functionalities for the first or second devices 102, 106; to provide data, content, images, video, etc. to the first or second devices 102, 106; and/or facilitate access to and store information in the databases 116. Servers 114 include, for example, one or more web servers hosting ecommerce sites, one or more messaging servers (e.g., instant messaging (IM), short message service (SMS), text messaging, Blackberry Messenger, electronic mail (email), push messaging, and the like), one or more servers to support the remote third party payment application, one or more payment infrastructure servers, and the like. Servers 114 may be located at one or more geographically distributed locations from each other. Moreover, although three servers 114 are shown in FIG. 1, more or less than three servers can be included in the system 100.

Databases 116 comprise one or more storage devices configured to store data and/or instructions for use by the servers 114, first device 102, and/or second devices 106. The content of the databases 116 is accessed via the second network 112 or directly by the servers 114 (not shown). Databases 116 may be located at one or more geographically distributed locations from each other and also from the servers 114. Alternatively, one or more of the databases 116 may be included within one or more of the servers 114. Although two databases 116 are shown in FIG. 1, more or less than two databases can be included in the system 100.

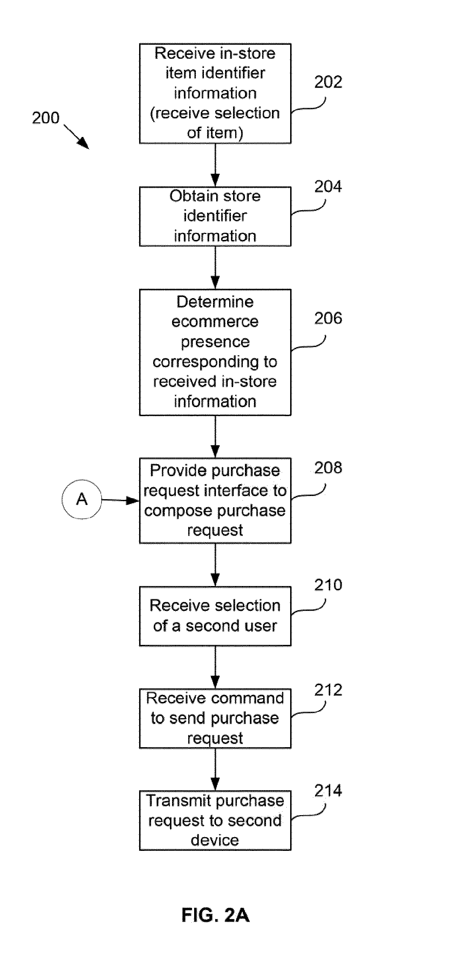

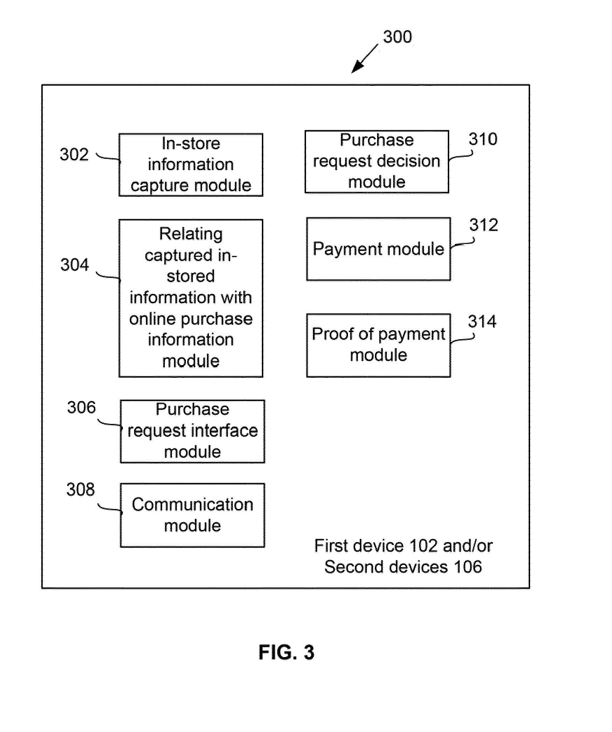

FIGs. 2A-2C illustrate an example flow diagram 200 for remote third party payment of in-store items while the first user 104 remains in the physical store according to some embodiments. FIG. 3 illustrates example modules 300 included in the first device 102 and/or the second device 106 to implement the functionalities in accordance with the flow diagram 200. FIGs. 2A-2C are discussed below in conjunction with FIG. 3. The modules 300 comprise one or more software components, applications, apps, or other units of code base or instructions (collectively referred to as app(s)) configured to be executed by one or more processors included in the first device 102, second devices 106, and/or servers 114. In some embodiments, the first device 102 downloads the app(s) from an appropriate ecommerce site (such as Blackberry App World). The second devices 106 can also download the same app(s) from the ecommerce site, or depending on the messaging type used, the app(s) download is optional for the second devices 106. Although modules 302-314 are shown as distinct modules in FIG. 3, it should be understood that modules 302-314 may be implemented as fewer or more modules than illustrated. It should also be understood that any of modules 302-314 may communicate with one or more components included in the system 100, such as servers 114, databases 116, first device 102, second device 106, first network 110, or second network 112.

The first user 104 is in a physical store (also referred to as a storefront or retail establishment) and sees a particular good or service (collectively referred to as an item or in-store item) that he or she wishes to purchase while in the store. However for whatever reason (e.g., due to the occasion, such as an upcoming birthday, job, or financial status), the first user 104 wishes another person who is not in the store (e.g., the second user 108) to pay for the item. The first user 104 initiates the flow diagram 200 to achieve such third party payment.

At a block 202, the first user 104 uses the information capture capabilities of the first device 102 to capture identifier information about the desired in-store item. Examples of the item identifier information include, but is not limited to, machine readable information, bar code, quick response (QR) code, stock keeping unit (SKU), manufacturer product model number, product name, alphanumeric or code identifier, and the like. The first device 102 obtains the item identifier information using a camera (and image or text recognition software) included in the first device 102, a reader or sensor included in the first device 102 (e.g., a bar code reader, machine readable information reader), or manual input of the item name, size, color, model number, SKU, etc. (e.g., via a physical or virtual keyboard included in the first device 102) by the first user 104 into the first device 102. Such capture or receipt of the item identifier information by the first device 102 is deemed to be a selection of an item located in the store. The remote third party payment app included in the first device 102 is launched by the first user 104 prior to block 202, it is automatically launched upon receiving the item identifier information, or the first user 104 launches the app after capturing the item identifier information.

Next at a block 204, an in-store information capture module 302 is configured to actively or passively obtain store identifier information corresponding to the particular physical store that the first user 104 is in. The store identifier information comprises identification of the store's name and/or sufficient geographical location pinpointing the store to avoid confusion with another store. The first device 102 is configured to obtain the store identifier information in one or more ways. In one example, the information is obtained using the global positioning system (GPS) capabilities of the first device 102. The GPS location of the store can be checked against online maps or directories to identify the store. In another example, the store itself (at the entrance or inside the store) provides store identifier information that can be received by the first device 102. The store provides a wireless broadcast or machine readable identification information (e.g., the first user 104 captures the machine readable identification information in the same way that the item identifier information was captured in block 202). In still another example, the uniqueness of the item identifier information may be sufficient to identify the store. Gap jeans, for example, are only offered in Gap stores, while, for example, Tide detergent is offered by many different store chains. In this case, the store identifier information is automatically obtained by virtue of obtaining the item identifier information, and thus, block 204 is optional. In yet another example, the in-store information capture module 302 prompts the first user 104 to enter the store name or location into the first device 102. If the in-store information capture module 302 is unable to determine the exact store that the first user 104 is in, a list of possible stores is displayed on the first device 102 for the first user 104 to select the store, or the in-store information capture module 302 is configured to prompt the first user 104 to manually input the store identifier information.

In any case, a relational module 304 is configured to process, collate, search, and/or access information at the servers 114 or databases 116, or otherwise use the received item identifier information and the store identifier information to determine an online storefront and product offering corresponding to the particular in-store item in the physical store (block 206). In particular, online product or item information (e.g., product description, photo, price, etc.) corresponding to the particular in-store item is located and received by the relational module 304. Such product information can be provided at a web page of the store's website, which is hosted on one of the servers 114. The relational module 304 is configured to conduct keyword search(es), as necessary, to find the web page corresponding to the in-store item. As an example, the first user 104 finds a particular pair of jeans in a Macy's. Based on the SKU (or bar code included on the price tag) of the pair of jeans and automatic or manually entered information identifying Macy's as the store, the relational module 304 determines and obtains the particular webpage on the macys.com website associated with the same pair of jeans.

Next at a block 208, a purchase request interface module 306 is configured to provide a purchase request user interface on the first device 102 for the first user 104 to compose (or complete) a purchase request to the second user 108. The module 306 starts a partially completed purchase request message so as to make the requesting process as easy as possible for the first user 104. The partially completed purchase request message is pre-populated with product (access) information, boilerplate request language, and/or other known information pertinent to the request. A template can be implemented to provide the partially composed message on the first device 102.

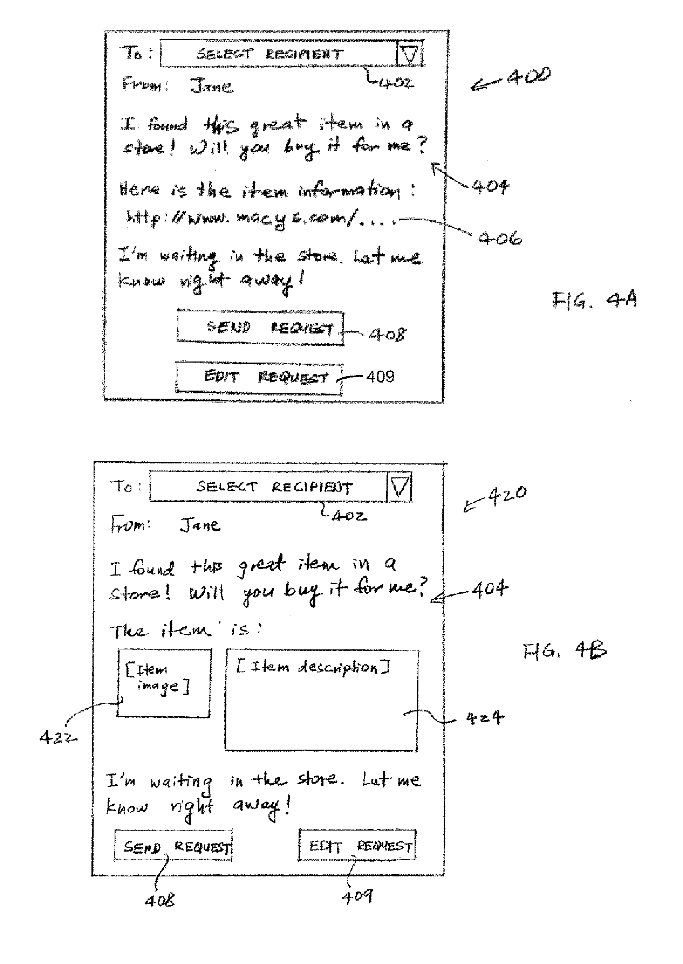

FIGs. 4A and 4B illustrate example (partially completed) purchase request messages. In FIG. 4A, an example message 400 includes a select recipient field 402, a message body 404, a uniform resource locator (URL) link 406, a send request icon or button 408, and an edit request icon or button 409. The select recipient field 402 is configured to obtain a particular one of the second users 108 (a recipient) to send the request to. The select recipient field 402 can include a dropdown list of persons names or identifiers, wherein the list was previously specified by the first user 104 as persons appropriate for making payment requests to (e.g., the app maintains an address book for this purpose). Alternatively, the module 306 accesses an address book or contacts list available elsewhere in the first device 102 to populate the dropdown list of persons. Or the select recipient field 402 accepts manual input of a person's phone number or email address.

The message body 404 comprises text informing the recipient the reason for the message. The URL link 406 (also referred to as a hyperlink) is configured to provide access to product information associated with the in-store item (e.g., the product information webpage located in block 206). Continuing the above example of jeans found at a Macy's store, the URL link 406 is associated with a webpage about the same jeans on the macys.com website. The first user 104 edits the message 400 by actuating the edit request button 409. Once the first device 102 receives the first user's 104 input of a particular second user 108 (block 210) and the first user 104 is satisfied with the message, he or she actuates the send request button 408. (The selected second user 108 is also referred to as a recipient, payer, or third party.) Actuation of the send request button 408 comprises receiving a command to send the purchase request to the designated second user 108 (block 212).

FIG. 4B shows another example message 420, the message 420 including the select recipient field 402, the message body 404, an item image 422, an item description 424, the send request icon or button 408, and the edit request icon or button 409. The message 420 differs from the message 400 in that item information is directly provided by the item image 422 and item description 424 (instead of accessing the item information via the URL link 406). The item image 422 and item description 424 can be obtained from the web page associated with the in-store item. The item description 424 includes the name of the item, details about the item (e.g., dimensions, color, size, materials, technical specifications, care instructions, etc.), price, and the like.

It is understood that the payment request message can comprise other formats and/or content than shown in messages 400, 420. The UI for composing the purchase request can also comprise one or more screens. For example, the selection of a recipient is performed in a different screen or window from composing the body of the message. As another example, the first device 102 presents the product information associated with the first user's desired item during the message composing process. At least a portion of the web page containing the product information can be displayed before presentation of message 400 or 420, in order to confirm that the correct product information is being included or pointed to in the purchase request message.

The payment request message comprises an IM, SMS, text message, Blackberry Messenger-type message, device manufacturer proprietary-type message, email, push-type message or communication, and the like. The messaging application associated with composing, transmitting, and receiving such messages is part of the remote third party payment app or a separate messaging application included in the first device 102. An IM-type message may be used, for example, because people tend to respond faster to IMs than email. The choice of message type may dictate the format and/or content of the message. In the case of IMs, for example, where length/data size is limited, a hyperlink to the product information may be used (e.g., message 400) over directly including photos or other data intensive content (e.g., message 420).

Once the first device 102 receives the command to send the purchase request (block 212), a communication module 308 is configured to facilitate transmission of the purchase request message to the second user 108 (block 214). The purchase request interface module 306 and/or the communication module 308 is also configured, in some embodiments, to transmit data or commands (embedded with or separate from the purchase request message) pertaining to obtaining payment on the second device 106. In some embodiments, the purchase request message is sent over the first network 110, the second network 112, one or more of the servers 114, back to the second network 112, and then to the second device 106 (or back to the first network 110 before arriving at the second device 106).

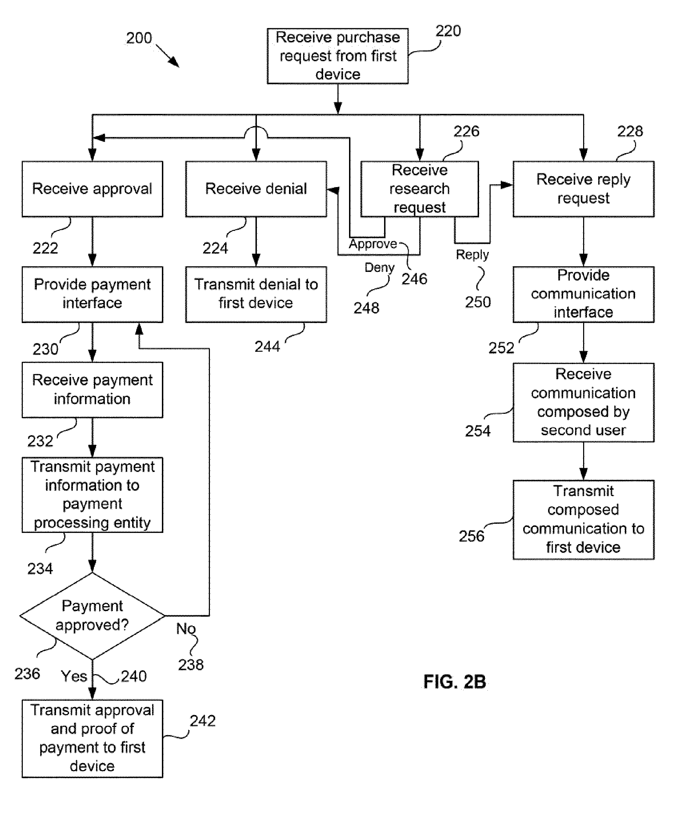

FIG. 2B illustrates functionalities occurring with respect to the second device 106 and the second user 108. At a block 220, the purchase request message transmitted in block 214 (FIG. 2A) is received at the second device 106. The delivery of the purchase request message to the second device 106 occurs in real-time or near real-time relative to the first user 104 sending the purchase request message. The second device 106 is configured to support real-time (or near real-time) push messaging with built-in alerts, so that the second user 108 is notified of the purchase request message for timely response back to the first user 104. The first device 102 similarly supports real-time (or near real-time) push messaging with built-in alerts.

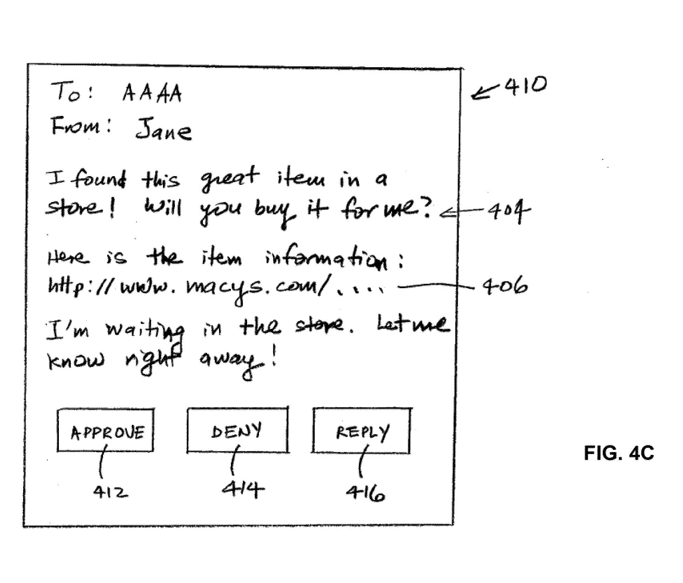

The second user 108 has at least four options for responding to the request: approve (block 222), deny (block 224), research the request (block 226), or communicate with the first user 104 (block 228). FIG. 4C illustrates an example request message 410 received by the second device 106 with response options according to some embodiments. The received message 410 corresponds to the message 400, thus including the URL link 406, an approve icon or button 412, a deny icon or button 414, and a reply icon or button 416. Alternatively, the response options may be provided on one or more separate screens by a purchase request decision module 310. If the message 420 was sent instead of message 400, the received message would contain the contents of message 420 (e.g., item image 422 and item description 424).

If the second user 108 approves the request by actuating the approve button 412 (or some other indication of approval) (block 222), a payment module 312 is configured to facilitate automatically providing a payment portal on the second device 106 (block 230). The payment portal (also referred to as a payment interface, payment platform, payment site, payment service, or the like) comprises one or more of the following: a payment application or platform integrated with the remote third party payment app, a payment application or platform separate from the remote third party payment app (e.g., a digital wallet system, Paypal), the store's ecommerce site, or other appropriate payment service/system that is accepted at the physical store the first user 104 is in. In one embodiment, the payment module 312 is configured to provide a (default) payment portal that is pre-selected by the app or based on data/command received from the first device 102 (such the store's ecommerce site). In another embodiment, the payment module 312 is configured to provide a plurality of payment portal options from which the second user 108 may choose from. In still another embodiment, the payment module 312 is configured to access past behavior history associated with the second user 108 to determine which payment portal to present to the second user 108. For instance, if the second device 106 is aware that the second user 108 has a Blackberry Wallet account, the second device 106 may provide a payment portal that coordinates with Blackberry Wallet.

Based on the presented payment portal, the second user 108, just as examples, pays as follows: the second user 108 makes an online purchase of the in-store item(s) at the store's ecommerce site and selects the in-store pickup option; the second user 108 makes an online purchase of an electronic gift card for the store via the store's ecommerce site; the second user 108 makes an online purchase of an electronic gift card for the store via a third party gift card ecommerce site; or the second user 108 transfers electronic funds (or other recognized currency equivalent) to the first user's 102 account using a fund transfer site, in which the transferred funds may include use conditions, such as use only at the store.

Next at a block 232, the second user 108 provides the necessary payment information (or securely accesses saved payment information) to the second device 106. The payment information comprises credit card information, debit card information, gift card information, bank account information, digital wallet information, electronic funds transfer information, or other recognized financial fund transfer information that can be verified in real-time or near real-time to be deemed a timely payment for the in-store item. Credit card information, for example, includes the credit card number, credit card expiration date, billing address, name on credit card, and amount of payment. Electronic funds transfer information (e.g., via Paypal), for example, includes the second user's 108 login and password, amount to transfer, and recipient identifier (or receipt account) information.

Paying for the in-store item by the second user 108 as discussed herein comprises: (1) a transfer of funds from the second user 108 to an account associated with/accessible by the physical store (e.g., pre-paying for the in-store item(s) on the first user's 104 behalf), or (2) a transfer of funds from the second user 108 to an account associated with the first user 104, in which this account of the first user 104 is an acceptable method of payment at checkout in the physical store (e.g., funding the first user's 104 account to pay for the in-store item(s)). In either case, the second user 108 is the ultimate payer of the in-store item(s) and the first device 104 serves as a proxy for the second user's digital wallet.

Once the requested payment information is received to fully pay for the in-store item, the payment module 312 coordinates with the communication module 308 to transmit the payment information to the appropriate payment processing entity or backend payment clearing service provider (depending on the particular payment interface provided at the block 230) (block 234). If a payment denial signal is returned from the payment processing entity or backend payment clearing service provider (block 236 and no branch 238), then the flow diagram 200 returns to the provide payment interface block 230 to retry capturing the payment information. Otherwise, if a payment approval signal is returned from the payment processing entity or backend payment clearing service provider (block 236 and yes branch 240), then payment authorization indication is communicated to the first device 102 (block 242). Block 242 can be initiated by the second device 108, the payment platform, or payment processing entity/backend payment clearing service provider.

If the second user 108 denies the request by actuating the deny button 414 in the request message 410 (or some other indication of denial) (block 224), the second device 106 transmits an indication of denial of the payment request to the first device 102 (block 244).

If the second user 108 decides to look into the request (block 226), the second user 108 can click on the URL link 406 included in the received message, which launches a web browser application and retrieves the web page containing detailed product information. The second user 108 can take actions outside of the payment request message - to research the item, obtain more information about the item, compare prices, or the like in order to make an informed decision. As an example, the second user 108 can exit the payment request message and conduct one or more searches in a web browser included in the second device 106. As another example, the second user 108 may decide to call the first user 104 to ask follow-up questions. Once sufficient research has been conducted, the second user 108 returns to the request message 410 to indicate approval (approval branch 246 to approve block 222), denial (deny branch 248 to deny block 224), or communicate textually with the first user 104 (reply branch 250 to communicate/reply block 228).

If the second user 108 decides to communicate with the first user 102 (block 228), the second user 108 clicks on the reply button 416 included in the request message 410 (or some other indication) to start a communication line with the first user 102. In response, the second device 106 provides a communication interface (block 252) for the second user 108 to compose a reply message. The second device 106 provides a communication interface that is the same type of communication as the received request message, or provides a choice of from among the different types of communication options supported by the second device 106 to choose from. The communication interface comprises, but is not limited to, an IM interface, SMS interface, email interface, phone interface, or the like. For example, an IM received message triggers the reply message to also be an IM. Alternatively, the second device 106 presents a screen with the different communication type options supported by the second device 106 (e.g., IM, email, phone, SMS, etc.), from which the second user 108 chooses one option. Such selection screen is provided prior to the communication interface. The purchase request decision module 310 may be configured to facilitate providing the communication interface, or the second device 106 can access a standalone communication application (e.g., Blackberry Messenger, email application).

Next at a block 254, the second device 106 receives the reply communication from the second user 108. Then the reply communication is transmitted by the second device 106 to the first device 102 (block 256) with the help of the communication module 308.

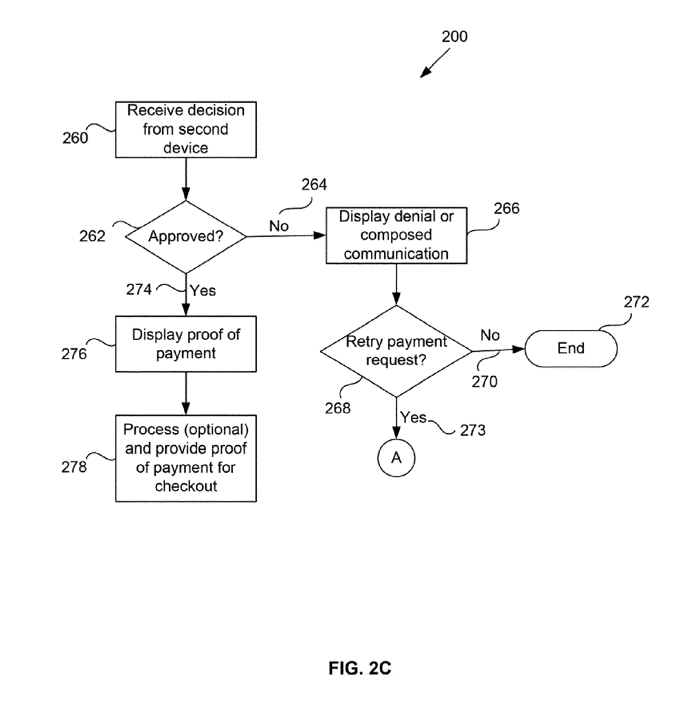

FIG. 2C illustrates a portion of the flow diagram 200 once the second user 108 has returned a decision about the first user's 104 payment request message. At a block 260, the second user's 108 decision transmitted in block 242, 244, or 256 (FIG. 2B) is received at the first device 102. The delivery of the decision message to the first device 102 occurs in real-time or near real-time. If the decision is not an approval (block 262 and no branch 264), then the first device 102 displays the denial or reply message. The first device 102 provides the opportunity to retry the payment request (or otherwise address the concern(s) raised in the reply message) (block 268). If the first user 104 decides not to retry making the request (no branch 270), then the second user's 108 decision not to purchase the in-store item on the first user's 104 behalf is final (block 272). Otherwise (yes branch 273), the first device 102 provides the purchase request interface again (returns to block 208).

When the decision is an approval (yes branch 274), a proof of payment module 314 is configured to process (as necessary) the proof of payment received from the second device 106, payment interface, payment processing entity or backend payment clearing service provider for the first user 104 to complete checkout in the physical store. The received proof of payment (also referred to as a digital proof of payment, digital receipt, electronic proof of payment, electronic receipt, digital payment confirmation, electronic payment confirmation, digital pre-payment, or electronic pre-payment) comprises textual, numerical, and/or image based information that serves as proof to the physical store that the in-store item(s) the first user 104 wishes to leave the store with has already been paid for, or serves as acceptable method of payment and amount of funds that can be spent/released by the first user 104 at the physical store for the in-store item(s).

At a block 276, the first device 102 is configured to display the received proof of payment, or some indication that the second user 108 has approved the payment request and that some electronic form of proof of payment has been received. The proof of payment module 314 is configured to ready the received proof of payment into a form useable at the checkout counter at the physical store (block 278). The proof of payment module 314 additionally provides display information on the first device 102 informing the first user 104 to proceed to the checkout counter. One or more instruction and information screens are provided on the first device 102 to instruct the first user 104 and/or the sales clerk to obtain the requisite proof of payment information to complete the checkout process. Examples of proof of payment include, but is not limited to, a barcode (or machine readable information) displayed on the first device 102 to be scanned by the sales clerk with a barcode reader common at the checkout counter, a near field communication (NFC) signal emitted by the first device 102 for detection at the checkout counter, or a confirmation number displayed on the first device 102 that is manually entered by the sales clerk into the store system. Thus, the first user 104 can leave the physical store with the in-store item(s) fully paid for, without having to return to the store at a later point in time to purchase the item(s). Physical stores are also more likely to make sales using the mechanism disclosed herein (especially impulse type sales), rather than having the first user 104 place items on hold and perhaps fail to return to actually purchase the items or not make the sale at all.

It is contemplated that one or more blocks of FIGs. 2A-2C may be performed in a different order than described above. For example, capturing the in-store item and store identifier information (blocks 202 and 204) can occur simultaneously or block 204 can occur before block 202. As another example, blocks 206 and 208 can occur simultaneously or block 208 can be performed prior to block 206. As still another example, blocks 202, 204, and/or 206 may be performed more than once prior to block 208 such that a single payment request message includes a request regarding more than one in-store item. These and other modifications as understood by those skilled in the art are encompassed by the present disclosure.

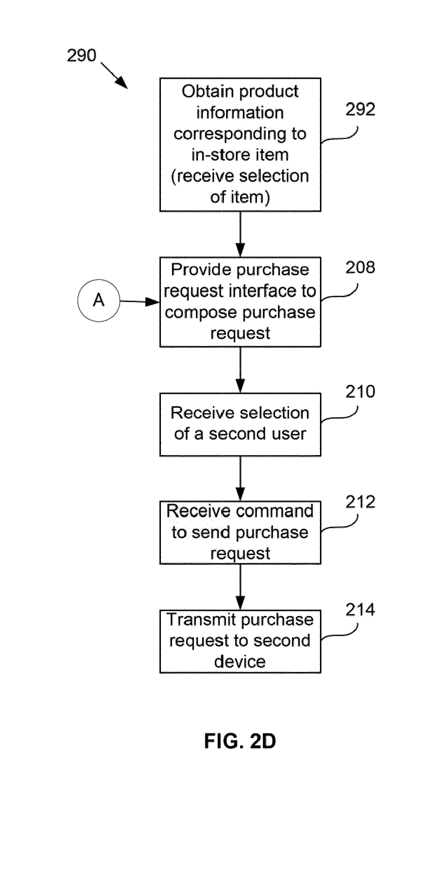

FIG. 2D illustrates an example flow diagram 290 that is a partial alternative to the flow diagram 200 of FIGs. 2A-2C. In particular, FIG. 2D comprises an alternative to FIG. 2A, such that FIGs. 2D and 2B-2C comprise an alternative embodiment for implementing the remote third party payment mechanism described herein. In FIG. 2D, a block 292 is provided as an alternative to blocks 202, 204, and 206. The remaining implementation of this embodiment is the same as discussed above for FIGs. 2A-2C.

At the block 292, the modules 302 and 304 are configured to obtain or receive product information/description corresponding to the in-store item desired by the first user 104. The first user 104 finds one or more items in a physical store that he wishes to purchase while in the store. The first user 104 specifies on the first device 102 the URL corresponding to an online site offering the same item (e.g., the URL of the store's ecommerce site), such as entering a URL address or navigating to a URL via search and/or review of search results if the exact URL is unknown. When a particular web page corresponding to the desired item has been selected (or otherwise indicated as desirable), product information corresponding to the desired in-store item has been obtain since the web page contains at least a portion of the product information about the in-store item. A physical or virtual keyboard included in the first device 102 can be used for navigating to the web page. By specifying an online source for the product information, the first user 104 has also provided to the first device 102 a selection of a particular item located in the store. The first user 104 views the web page and may navigate to a different web page if the initial web page is for the wrong product or does not sufficiently describe the item. Continuing the example above of the pair of jeans at a Macy's store, the first device 102 obtains product information about those pair of jeans (and selection of that pair of jeans) when the first user 104 navigates to a web page on the macys.com website corresponding to the same pair of jeans. Such web page includes at least a photo, detailed description, size choices, color choices, price, and the like. The product information is used at the block 208 to compose the purchase request message to a select one of the second users 108.

In this manner, a beginning to end electronic solution for purchasing items located in a physical store during a first user's visit to the store by a remotely located second user is disclosed herein. The first user located in the store and a second user remotely located from the store are involved in making an in-store purchase. A mechanism seamlessly facilitates receiving a selection of the desired in-store item(s); generating a purchase request message to the second user including pertinent information about the desired in-store item(s); providing an electronic payment portal for the second user to remotely pay for the in-store item(s); and providing a proof of payment to the first user, in response to the second user paying for the item(s), to proceed to checkout of the store with those in-store item(s). The mechanism is accessed on a first device associated with the first user and a second device associated with the second user, wherein each of the first and second devices supports real-time (or near real-time) push messaging with built-in alerts. Such mechanism reduces the effort required by the first and second users to achieve purchasing item(s) in a store. For example, the first user need not launch multiple applications, conduct online searches (in some instance), manually enter data, switch back and forth between applications, or otherwise manually facilitate the process. The second user is not required to search for product information in order to make an informed decision about paying for the item(s), launch multiple applications, switch back and forth between applications, determine payment methods, typing a response, or the like.

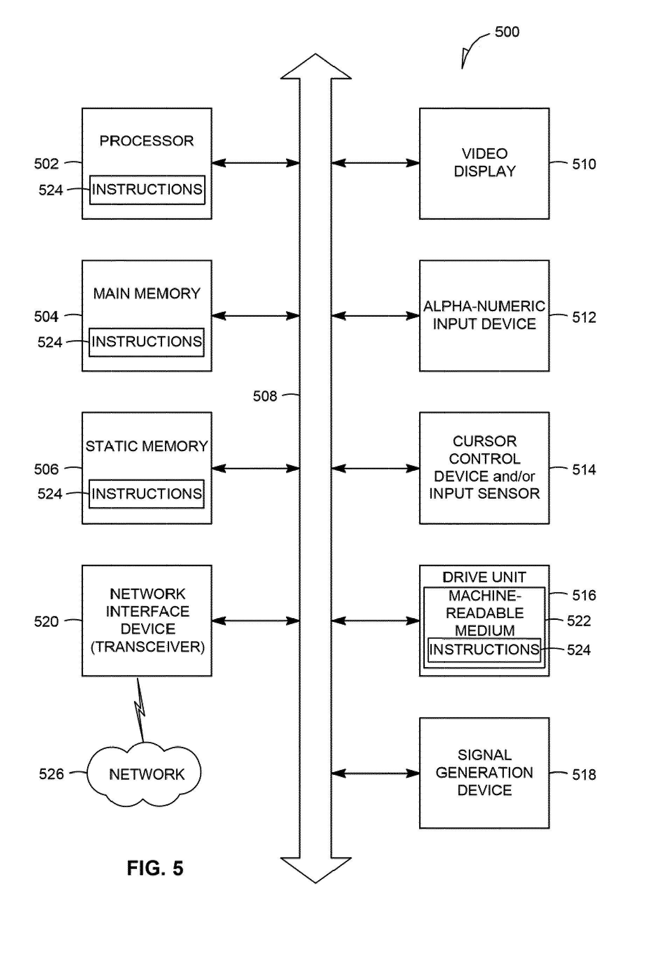

FIG. 5 shows a diagrammatic representation of a machine in the example form of a computer system 500 within which a set of instructions, for causing the machine to perform any one or more of the methodologies discussed herein, may be executed. The computer system 500 can comprise, for example, any of the first device 102, second devices 106, and/or servers 114. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server computer, a client computer, a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 500 includes a processor 502 (e.g., a central processing unit (CPU), a graphics processing unit (GPU), or both), a main memory 504 and a static memory 506, which communicate with each other via a bus 508. The computer system 500 may further include a video display unit 510 (e.g., liquid crystal display (LCD), organic light emitting diode (OLED) display, touch screen, or a cathode ray tube (CRT)). The computer system 500 also includes an alphanumeric input device 512 (e.g., a keyboard, a physical keyboard, a virtual keyboard using software), a cursor control device or input sensor 514 (e.g., a mouse, a trackpad, a trackball, a sensor or reader, a machine readable information reader, bar code reader), a disk drive unit 516, a signal generation device 518 (e.g., a speaker) and a network interface device or transceiver 520.

The disk drive unit 516 includes a machine-readable medium 522 on which is stored one or more sets of instructions (e.g., software 524) embodying any one or more of the methodologies or functions described herein. The software 524 may also reside, completely or at least partially, within the main memory 504 and/or within the processor 502 during execution thereof by the computer system 500, the main memory 504 and the processor 502 also constituting machine-readable media.

The software 524 may further be transmitted or received over a network 526 via the network interface device 520.

While the machine-readable medium 522 is shown in an example embodiment to be a single medium, the term "machine-readable medium," "computer readable medium," and the like should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to include, but not be limited to, solid-state memories, optical and magnetic media, and carrier wave signals.

It will be appreciated that, for clarity purposes, the above description describes some embodiments with reference to different functional units or processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Certain embodiments described herein may be implemented as logic or a number of modules, engines, components, or mechanisms. A module, engine, logic, component, or mechanism (collectively referred to as a "module") may be a tangible unit capable of performing certain operations and configured or arranged in a certain manner. In certain example embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor, application specific integrated circuit (ASIC), or array) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in dedicated and permanently configured circuitry, or in temporarily configured circuitry (e.g., configured by software) may be driven by, for example, cost, time, energy-usage, and package size considerations.

Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices and can operate on a resource (e.g., a collection of information).

Although the present invention has been described in connection with some embodiments, it is not intended to be limited to the specific form set forth herein. One skilled in the art would recognize that various features of the described embodiments may be combined in accordance with the invention. Moreover, it will be appreciated that various modifications and alterations may be made by those skilled in the art without departing from the spirit and scope of the invention.

The Abstract of the Disclosure is provided to comply with 37 C.F.R. §1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A method (200, 290) of purchasing one or more items in a store, the method comprising:
receiving (202, 292), at a first device (102), a selection of an item located in the store;
transmitting (214), from the first device (102), a purchase request (400, 420) for the item located in the store to a second device (106), the purchase request (400, 420) including product information associated with the item and a request for a second user (108) associated with the second device (106) to pay for the item for a first user (104) associated with the first device (102) while the first user (104) remains in the store;
determining (262) whether a proof of payment corresponding to the purchase request (400, 420) has been received at the first device (102); and
in response to receiving the proof of payment, providing (278) the proof of payment to the store to complete purchase of the item in the store.

2. The method of claim 1, wherein the receiving (202, 292) of the selection of the item comprises obtaining (202) item identifier information associated with the item.

3. The method of claim 2, wherein the item identifier information comprises at least one of machine readable information, bar code, quick response (QR) code, stock keeping unit (SKU), manufacturer product model number, product name, and alphanumeric or code identifier.

4. The method of claim 2, further comprising:
obtaining (204) store identifier information associated with the store; and
determining (206) the product information based on the item identifier information and the store identifier information.

5. The method of claim 1, wherein the receiving (202, 292) of the selection of the item comprises obtaining (292) a web page including at least a portion of the product information.

6. The method of any of claims 1 to 5, further comprising determining (206) an ecommerce site corresponding to the store, wherein the product information is associated with the ecommerce site.

7. The method of any of claims 1 to 6, wherein the purchase request (400, 420) includes at least approve (412) and deny (414) reply options.

8. The method of any of claims 1 to 7, wherein the proof of payment comprises at least one of a barcode, machine readable information, near field communication (NFC) signal, and a confirmation number.

9. A non-transitory computer readable medium having computer-readable instructions embodies therein for execution by a processor, the computer-readable instructions implementing the method of any of claims 1 to 8.

10. A mobile communication device (102), comprising:
an input sensor (514) configured to receive selection of an item located in a store;
a transceiver (520) configured to transmit a purchase request for the item located in the store to a second device, the purchase request including item information associated with the item and a request for a second user associated with the second device to purchase the item for a first user associated with the mobile communication device while the first user remains in the store;
a processor (502) configured to determine whether a proof of payment corresponding to the purchase request has been received; and
a display (510), in response to receiving the proof of payment, configured to provide the proof of payment within the store to complete purchase of the item in the store, wherein the processor is in communication with each of the input sensor, the transceiver, and the display.

11. The device of claim 10, wherein the device (102) comprises at least one of a cellular phone, a smart phone, a tablet, a netbook, an ultrabook, a laptop, and a wireless device.

12. The device of any of claims 10 to 11, wherein the input sensor (514) comprises at least one of a camera, a machine readable information reader, a physical keyboard, and a virtual keyboard.

13. The device of any of claims 10 to 12, further comprising a global positioning satellite (GPS) unit in communication with the processor (502), wherein the GPS unit is configured to receive location information associated with the store, a store identifier information being based on the received location information associated with the store.

14. The device of any of claims 10 to 13, wherein each of the device (102) and the second device (106) comprises a device supporting push messaging with built-in alert functionality.

15. The device of any of claims 10 to 14, wherein the device (102) is configured to perform the method of any of claims 2-8.
